# EUROPEAN PATENT APPLICATION

(11) **EP 3 196 736 A1**
(43) Date of publication of application: **26.07.2017**
(21) Application number: 17152055.4
(22) Date of filing: 18.01.2017
(51) Int. Cl.: G06F 3/01, G06F 3/03

(54) **METHOD AND APPARATUS FOR RECOGNIZING GESTURE**

(30) Priority: 19.01.2016 CN 201610035203
(71) Applicant: Beijing Xiaomi Mobile Software Co., Ltd., Beijing 100085 (CN)
(72) Inventor: LI, Guosheng, Haidian District, Beijing 100085 (CN); SUN, Wei, Haidian District, Beijing 100085 (CN); JIANG, Zhongsheng, Haidian District, Beijing 100085 (CN)
(74) Representative: Robson, Aidan John

(57) **Abstract**

The present disclosure relates to a method and an apparatus for recognizing a gesture, pertaining to the field of display technology. The method is applied in a terminal containing a touch screen with ambient-light sensors distributed thereon, the method includes: when light coming into at least one ambient-light sensor is obstructed and no touch operation applied on the touch screen is detected, and if it is detected (101) that the light coming into the ambient-light sensor is firstly switched (102) from a non-obstructed state to an obstructed state and then switched from an obstructed state to a non-obstructed state, the operation gesture of the user may be recognized (103) according to the position of the at least one ambient-light sensor. It can solve the problem that the terminal cannot recognize the operation gesture made by the user when it is not convenient for the user to perform a touch operation on the touch screen. Moreover, it can enrich the manners for recognizing a gesture and improve the flexibility of recognizing a gesture.

## Description

### TECHNICAL FIELD

The present disclosure generally relates to the field of display technology, and more particularly, to a method and an apparatus for recognizing a gesture, applied in a terminal containing a touch screen with ambient light sensors.

### BACKGROUND

With the development of technology of touch screens, the touch screens tend to have more and more functions, such as a function of recognizing a gesture on the touch screen.

In the related art, the touch screen may firstly determine a position where the user touches the touch screen, and then, the touch screen may recognize the gesture made by the user based on the touch position and its movement. Using such systems it is necessary for a user to touch the screen. This may not be convenient at all times, such as when a user's finger is dirty.

### SUMMARY

In order to solve the problems existing in the related art, the present disclosure provides a method and an apparatus for recognizing a gesture.

According to a first aspect of the embodiments of the present disclosure, there is provided a method for recognizing a gesture, the method being performed by a terminal containing a touch screen with ambient-light sensors distributed thereon. The method comprises:
when light coming into at least one ambient-light sensor is obstructed and no touch operation applied on the touch screen is detected, detecting whether the at least one ambient-light sensor satisfies a preset change condition, the preset change condition being the light coming into the ambient-light sensor being firstly switched from a non-obstructed state to an obstructed state and then switched from an obstructed state to a non-obstructed state;
when at least one ambient-light sensor satisfies the preset change condition, determining a position of the at least one ambient-light sensor; and
recognizing an operation gesture of a user according to the position of the at least one ambient-light sensor.

Optionally, detecting whether the at least one ambient-light sensor satisfies the preset change condition includes:
for each ambient-light sensor, acquiring a light intensity measured by the ambient-light sensor;
detecting whether the light intensity firstly decreases and then increases; and
if the light intensity firstly decreases and then increases, determining that the light coming into the ambient-light sensor is firstly switched from a non-obstructed state to an obstructed state and then switched from an obstructed state to a non-obstructed state, which satisfies the preset change condition.

Optionally, recognizing an operation gesture of a user according to the position of the at least one ambient-light sensor includes:
acquiring a time sequence of the at least one ambient-light sensor being successively obstructed; and
recognizing an operation gesture according to the position of the at least one ambient-light sensor and the time sequence.

Optionally, the method further includes:
acquiring from the at least one ambient-light sensor a time period of the change process of the light intensity of each ambient-light sensor;
calculating an average of the time periods of the change processes;
determining an operation speed of the gesture according to the average; and
determining a responding manner to the gesture according to the operation speed.

Optionally, the method further includes:
acquiring from the at least one ambient-light sensor a minimum value of the light intensity of each ambient-light sensor;
detecting whether a light intensity measured by at least one ambient-light sensor remains at the minimum value during the same time period; and
if the light intensity measured by the at least one ambient-light sensor remains at the minimum value during the same time period, recognizing the gesture as an obstructing gesture of the user.

According to a second aspect of the embodiments of the present disclosure, there is provided an apparatus for recognizing a gesture, the method being performed by a terminal containing a touch screen with ambient-light sensors distributed thereon. The apparatus includes:
a first detecting module configured to, when light coming into at least one ambient-light sensor is obstructed and no touch operation applied on the touch screen is detected, detect whether the at least one ambient-light sensor satisfies a preset change condition, the preset change condition being the light coming into the ambient-light sensor being firstly switched from a non-obstructed state to an obstructed state and then switched from an obstructed state to a non-obstructed state;
a first determining module configured to, when the first detecting module detects that at least one ambient-light sensor satisfies the preset change condition, determine a position of the at least one ambient-light sensor; and
a first recognition module configured to recognize an operation gesture of a user according to the position of the at least one ambient-light sensor which is determined by the first determining module.

Optionally, the first detecting module includes:
a first acquiring sub-module configured to, for each ambient-light sensor, acquire a light intensity measured by the ambient-light sensor;
a detecting sub-module configured to detect whether the light intensity acquired by the first acquiring sub-module firstly decreases and then increases; and
a determining sub-module configured to, if the detecting sub-module detects that the light intensity firstly decreases and then increases, determine that the light coming into the ambient-light sensor is firstly switched from a non-obstructed state to an obstructed state and then switched from an obstructed state to a non-obstructed state , which satisfies the preset change condition.

Optionally, the first recognition module includes:
a second acquiring sub-module configured to acquire a time sequence of the at least one ambient-light sensor being successively obstructed; and
a recognition sub-module configured to recognize an operation gesture according to the position of the at least one ambient-light sensor and the time sequence acquired by the second acquiring sub-module.

Optionally, the apparatus further includes:
a first acquiring module configured to acquire from the at least one ambient-light sensor a time period of the change process of the light intensity of each ambient-light sensor;
a calculating module configured to calculate an average of the time periods of the change processes acquired by the first acquiring module;
a second determining module configured to determine an operation speed of the gesture according to the average calculated by the calculating module; and
a third determining module configured to determine a responding manner to the gesture according to the operation speed determined by the second determining module.

Optionally, the apparatus further includes:
a second acquiring module configured to acquire from the at least one ambient-light sensor a minimum value of the light intensity of each ambient-light sensor;
a second detecting module configured to detect whether a light intensity measured by at least one ambient-light sensor remains at the minimum value acquired by the second acquiring module during the same time period; and
a second recognition module configured to, if the second detecting module detects that the light intensity measured by the at least one ambient-light sensor remains at the minimum value during the same time period, recognize the gesture as an obstructing gesture of the user.

According to a third aspect of the embodiments of the present disclosure, there is provided an apparatus for recognizing a gesture, the method being performed by a terminal containing a touch screen with ambient-light sensors distributed thereon. The apparatus includes:
a processor; and
a memory for storing instructions executable by the processor;
wherein the processor is configured to perform:
when light coming into at least one ambient-light sensor is obstructed and no touch operation applied on the touch screen is detected, detecting whether the at least one ambient-light sensor satisfies a preset change condition, the preset change condition being the light coming into the ambient-light sensor being firstly switched from a non-obstructed state to an obstructed state and then switched from an obstructed state to a non-obstructed state;
when at least one ambient-light sensor satisfies the preset change condition, determining a position of the at least one ambient-light sensor; and
recognizing an operation gesture of a user according to the position of the at least one ambient-light sensor.

The technical solution according to embodiments of the present disclosure may have the following beneficial effects.

When light coming into at least one ambient-light sensor is obstructed and no touch operation applied on the touch screen is detected, and if it is detected that the light coming into each of the ambient-light sensors is firstly switched from a non-obstructed state to an obstructed state and then switched from an obstructed state to a non-obstructed state, the operation gesture of the user may be recognized according to the position of the at least one ambient-light sensor. Thereby, the terminal can recognize the operation gesture made by the user without requiring the user to perform a touch operation on the touch screen. In this way, it can solve the problem that the terminal cannot recognize the operation gesture made by the user when it is not convenient for the user to perform a touch operation on the touch screen. Moreover, it can enrich the manners for recognizing a gesture and improve the flexibility of recognizing a gesture.

In addition, by recognizing a speed of an operation gesture and recognizing an obstructing gesture, the types of operation gestures can be expanded. It can solve the problem of insufficiency of manners for responding to operation gestures due to insufficient types of user gestures without contacting the touch screen. Thus, it can enrich the responding manners to the operation gestures on the touch screen.

It is to be understood that both the foregoing general description and the following detailed description are exemplary only and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart illustrating a method for recognizing a gesture according to an exemplary embodiment.
Fig. 2A is a flow chart illustrating a method for recognizing a gesture according to another exemplary embodiment.
Fig. 2B is a schematic diagram illustrating a process of determining an operation position of an operation gesture according to an exemplary embodiment.
Fig. 2C is a schematic diagram illustrating a process of determining an operation position of an operation gesture according to another exemplary embodiment.
Fig. 2D is a schematic diagram illustrating a process of recognizing an operation gesture according to an exemplary embodiment.
Fig. 2E is a schematic diagram illustrating a process of recognizing an operation gesture according to another exemplary embodiment.
Fig. 2F is a schematic diagram illustrating a process of recognizing an operation gesture according to another exemplary embodiment.
Fig. 2G is a flow chart illustrating a method for recognizing a speed of a gesture according to an exemplary embodiment.
Fig. 2H is a flow chart illustrating a method for recognizing an obstructing gesture according to an exemplary embodiment.
Fig. 3 is a block diagram illustrating an apparatus for recognizing a gesture according to an exemplary embodiment.
Fig. 4 is a block diagram illustrating an apparatus for recognizing a gesture according to an exemplary embodiment.
Fig. 5 is a block diagram illustrating an apparatus for recognizing a gesture according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

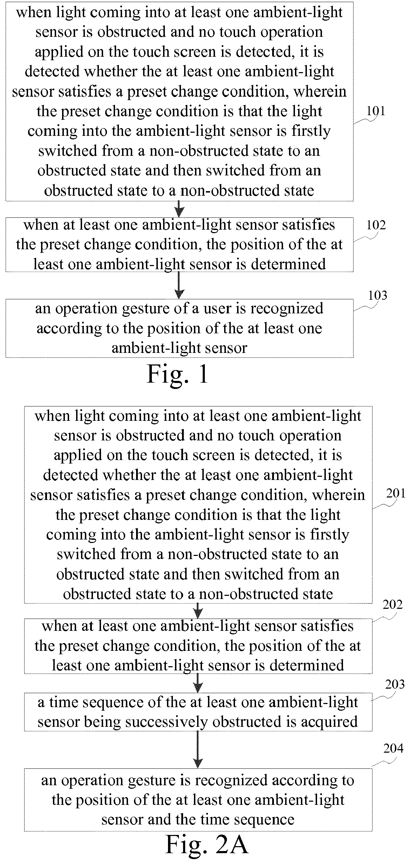

Fig. 1 is a flow chart illustrating a method for recognizing a gesture according to an exemplary embodiment. The method is applied in a terminal containing a touch screen. Ambient-light sensors are distributed on the touch screen. As shown in Fig. 1, the method for recognizing a gesture includes the following steps.

At step 101, when light coming into at least one ambient-light sensor is obstructed and no touch operation applied on the touch screen is detected, it is detected whether the at least one ambient-light sensor satisfies a preset change condition, the preset change condition being the light coming into the ambient-light sensor being firstly switched from a non-obstructed state to an obstructed state and then switched from an obstructed state to a non-obstructed state.

At step 102, when at least one ambient-light sensor satisfies the preset change condition, the position of the at least one ambient-light sensor is determined.

At step 103, an operation gesture of a user is recognized according to the position of the at least one ambient-light sensor.

Accordingly, in the method for recognizing a gesture provided by the present disclosure, when light coming into at least one ambient-light sensor is obstructed and no touch operation applied on the touch screen is detected, and if it is detected that the light coming into each of the ambient-light sensors is firstly switched from a non-obstructed state to an obstructed state and then switched from an obstructed state to a non-obstructed state, the operation gesture of the user may be recognized according to the position of the at least one ambient-light sensor. Thereby, the terminal can recognize the operation gesture made by the user without requiring the user to perform a touch operation on the touch screen. In this way, it can solve the problem that the terminal cannot recognize the operation gesture made by the user when it is not convenient for the user to perform a touch operation on the touch screen. Moreover, it can enrich the manners for recognizing a gesture and improve the flexibility of recognizing a gesture.

Fig. 2A is a flow chart illustrating a method for recognizing a gesture according to another exemplary embodiment. The method is applied in a terminal containing a touch screen. Ambient-light sensors are distributed on the touch screen. As shown in Fig. 2A, the method for recognizing a gesture includes the following steps.

At step 201, when light coming into at least one ambient-light sensor is obstructed and no touch operation applied on the touch screen is detected, it is detected whether the at least one ambient-light sensor satisfies a preset change condition, wherein the preset change condition is that the light coming into the ambient-light sensor is firstly switched from a non-obstructed state to an obstructed state and then switched from an obstructed state to a non-obstructed state.

In the related art, the user has to touch the touch screen with his or her finger for the terminal to recognize the operation gesture of the user. That is, the operation gesture is required to be applied on the touch screen. However, when the user's finger gets dirty or is inconvenient to touch the touch screen, the user has to get his or her finger clean before he or she can perform the touch operation, which is not efficient enough for the user to operate the terminal. Otherwise, if the user directly performs a touch operation on the touch screen, it will make the touch screen contaminated. In order to solve this problem, the present embodiment provides a method in which the operation gesture of the user can be recognized without the finger directly touching the touch screen. The method is described in detail as follows.

The ambient-light sensors distributed on the touch screen may measure light intensities of the lights coming into the ambient-light sensors. When there is an object which obstructs the touch screen, the light intensity measured by the obstructed ambient-light sensor will decrease. Accordingly, the ambient-light sensor may determine whether the ambient-light sensor itself is obstructed according to the light intensity, and may report the obstructing event to the terminal when the ambient-light sensor itself is obstructed.

Upon receiving a reported obstructing event from at least one ambient-light sensor, the terminal may detect whether there is a touch operation on the touch screen. If a touch operation is being applied on the touch screen, it means that the obstructing event is caused by the operation gesture acted on the touch screen; otherwise, if no touch operation is being applied on the touch screen, it means that the obstructing event is caused by an operation gesture not applied on the touch screen.

It may be assumed that the gesture is a sliding gesture, then for any ambient-light sensor obstructed during the operation process of the sliding gesture, the light coming into the ambient-light sensor is firstly switched from a non-obstructed state to an obstructed state and then switched from an obstructed state to a non-obstructed state. Accordingly, it may be recognized whether the operation gesture made by the user is a sliding gesture by detecting whether the at least one ambient-light sensor satisfies the above preset change condition.

In the embodiment, the method for detecting whether the at least one ambient-light sensor satisfies the above preset change condition may include the following steps.

For each ambient-light sensor, a light intensity measured by the ambient-light sensor is acquired. It is detected whether the light intensity is firstly decrease and then increase. If the light intensity is firstly decrease and then increase, it may be determined that the light coming into the ambient-light sensor is firstly switched from a non-obstructed state to an obstructed state and then switched from an obstructed state to a non-obstructed state, which satisfies the preset change condition.

When the light coming into the ambient-light sensor is not obstructed, the light intensity measured by the ambient-light sensor is relatively large. When the light coming into the ambient-light sensor is obstructed, the light intensity measured by the ambient-light sensor is lower or relatively small. Therefore, the change of the ambient-light sensor may be determined according to the change of the light intensity. That is, when the light intensity decreases by a predetermined amount or changes from a large value to a small value, it may be determined that the light coming into the ambient-light sensor is switched from a non-obstructed state to an obstructed state; and when the light intensity increases by a predetermined amount or changes from a small value to a large value, it may be determined that the light coming into the ambient-light sensor is switched from an obstructed state to a non-obstructed state.

At step 202, when at least one ambient-light sensor satisfies the preset change condition, the position of the at least one ambient-light sensor is determined.

When a user is making an operation gesture at a present time instant, since his or her finger obstructs the light coming into an ambient-light sensor, at least one shading portion will be formed on the touch screen. In the present embodiment, the central part of the shading portion may be taken as a position of the ambient-light sensor which satisfies the preset change condition at the present time instant. This is the operation position of the operation gesture at the present time instant.

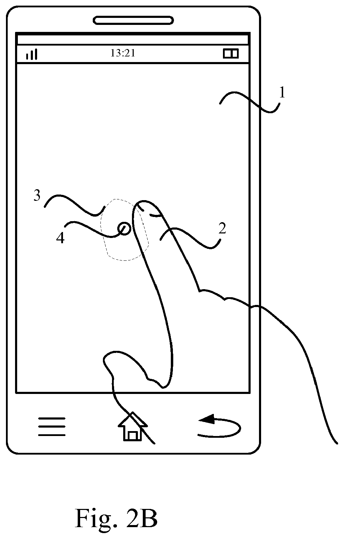

For example, as shown in Fig. 2B, at a certain time instant, the user makes an operation gesture 2 which forms a shading portion 3 on the terminal 1. The terminal 1 acquires a position of at least one ambient-light sensor which corresponds to the shading portion 3 and calculates a central point 4 of the position of at least one ambient-light sensor. Then, the central point 4 is taken as the operation position of the operation gesture at that time instant.

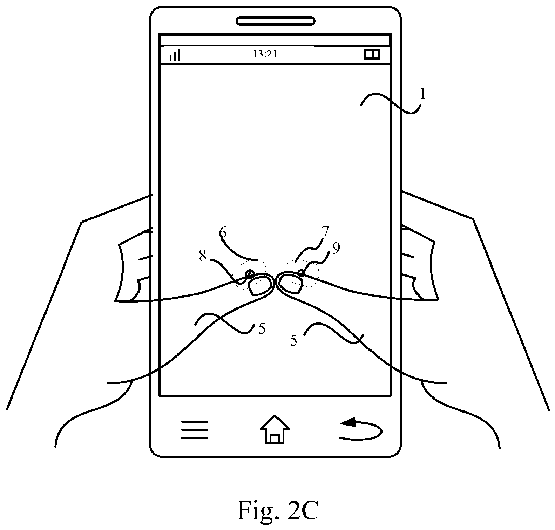

For another example, as shown in Fig. 2C, at a time instant, the user makes an operation gesture 5 which forms a shading portion 6 and a shading portion 7 on the terminal 1. The terminal 1 acquires a position of at least one ambient-light sensor which corresponds to the shading portion 6 and calculates a central point 8 of the position of at least one ambient-light sensor. The terminal 1 acquires a position of at least one ambient-light sensor which corresponds to the shading portion 7 and calculates a central point 9 of the position of at least one ambient-light sensor. Then, the central points 8 and 9 are taken as the operation positions of the operation gesture at that time instant.

In the embodiment, during the process of determining shading portions by the terminal, a region formed by the ambient-light sensors, which have adjacent locations and have the identical intensity at the same time instant, may be determined as a shading portion. The present embodiment does not limit the method for determining a shading portion.

The terminal may determine an operation position of an operation gesture at each time instant according to the position of the at least one ambient-light sensor, and may recognize the operation gesture of the user according to the operation position at each time instant.

At step 203, a time sequence of the at least one ambient-light sensor being successively obstructed is acquired.

If an ambient-light sensor reports an obstructing event to the terminal, upon receiving the obstructing event, the terminal may record the receiving time of the obstructing event. Therefore, when the operation gesture of the user is generated by a series of successive actions, such as a sliding operation, the terminal may acquire the time of the at least one ambient-light sensor being successively obstructed and may determine the time sequence of the at least one ambient-light sensor being successively obstructed according to the acquired time.

At step 204, an operation gesture is recognized according to the position of the at least one ambient-light sensor and the time sequence.

According to the operation position of the operation gesture at each time instant determined at step 202, an operation trajectory of the operation gesture without contacting the touch screen may be obtained. According to the time sequence of the at least one ambient-light sensor being successively obstructed, which is determined at step 203, the operation direction of the operation gesture may be obtained. Then, the terminal may recognize the operation gesture made by the user according to the operation trajectory and the operation direction.

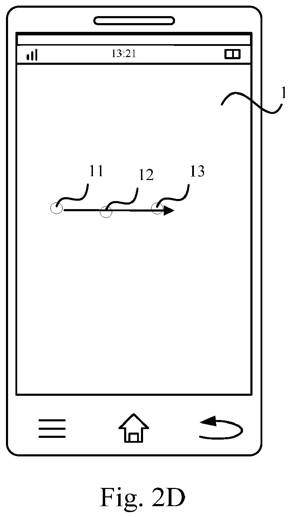

For example, as shown in Fig. 2D, in the terminal 1, an operation position 11 is determined at a first time instant, an operation position 12 is determined at a second time instant and an operation position 13 is determined at a third time instant. Then, the operation gesture of the user may be recognized as a rightward sliding gesture according to the determined positions and the time sequence of the determined positions.

Optionally, a first angle threshold and a second angle threshold may be set for the terminal to determine the operation direction of the operation gesture. In the embodiment, the second angle threshold is larger than the first angle threshold. The terminal may randomly select operation positions determined at any two time instants. If an included angle between the connecting line of the two operation positions and a horizontal direction is smaller than the first angle threshold, the operation gesture may be recognized as a leftward or rightward sliding operation. If the included angle between the connecting line of the two operation positions and the horizontal direction is larger than the first angle threshold and smaller than the second angle threshold, the operation gesture may be recognized as a sliding operation in an inclined direction. If the angle between the connecting line of the two operation positions and the horizontal direction is larger than the second angle threshold, the operation gesture may be recognized as a sliding operation as an upward or downward sliding gesture.

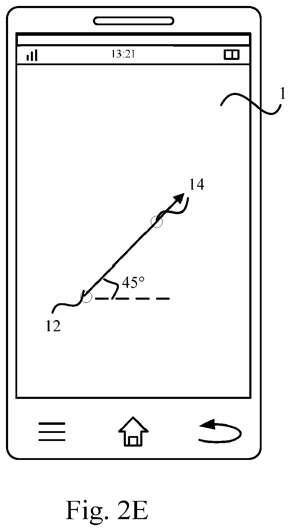

For example, as shown in Fig. 2E, for the terminal 1, the first angle threshold is set as 30 degrees, and the second angle threshold is set as 60 degrees. An operation position 12 is determined at a randomly selected first time instant, an operation position 14 is determined at a randomly selected second time instant, the included angle between the connecting line of the two operation positions and the horizontal direction is 45 degrees, which is larger than the first angle threshold and smaller than the second angle threshold. In this case, according to the determined positions, the time sequence of the determined positions and the included angle between the connecting line and the horizontal direction, the terminal may recognize the operation gesture of the user as a rightward and upward sliding gesture.

Optionally, the terminal may also calculate an average of the included angles between the connecting lines of two operation positions at pairs of successive time instants and the horizontal direction, and compare the average with the first angle threshold and the second angle threshold. If the average is smaller than the first angle threshold, the gesture is recognized as a leftward or a rightward sliding gesture. If the average is larger than the first angle threshold and smaller than the second angle threshold, the gesture is recognized as a sliding gesture in an inclined direction. If the average is larger than the second angle threshold, the gesture is recognized as an upward or downward sliding gesture.

Optionally, when the terminal determines at least two operation positions at the same time instant, for each of the operation positions, operation positions closest to one another at successive time instants will be determined as one combined operation, and the operation gesture of the user may be recognized according to the determined operation combinations.

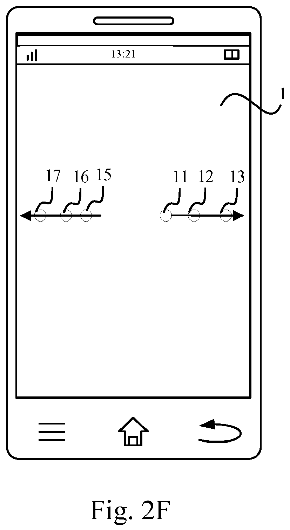

For example, as shown in Fig. 2F, in the terminal 1, operation positions 11 and 15 are determined at a first time instant; operation positions 12 and 16 are determined at a second time instant; operation positions 13 and 17 are determined at a third time instant. In this case, the terminal may determine the operation positions 11, 12 and 13 as one combined operation and the operation positions 15, 16 and 17 as one combined operation, and may recognize user's operation gesture according to the two combined operations.

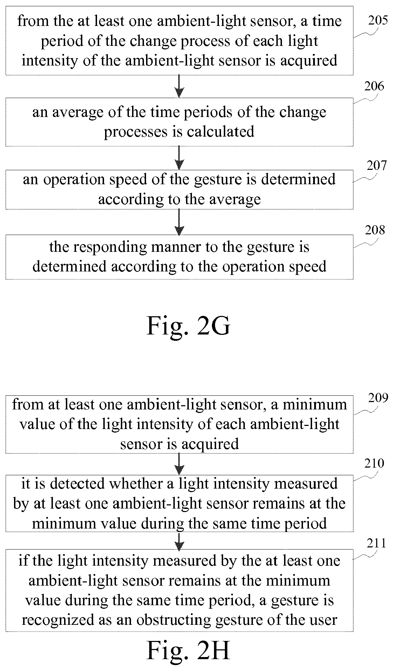

Optionally, in order to provide more responding manners to various operation gestures, the terminal may also recognize a speed of a gesture. Fig. 2G is a flow chart illustrating a method for recognizing a speed of a gesture according to an exemplary embodiment. The method for recognizing a speed of a gesture may be applied in a terminal containing a touch screen. Ambient-light sensors are distributed on the touch screen. As shown in Fig. 2G, the method for recognizing a speed of a gesture includes the following steps.

At step 205, from the at least one ambient-light sensor, a time period of the change process of the light intensity of each ambient-light sensor is acquired.

For each ambient-light sensor, in one embodiment, the terminal records a time period from the light intensity of the ambient-light sensor starts to change till the time when the change stops. When the ambient-light sensor satisfies the preset change condition, the terminal may calculate the time period of the change process of the light intensity of the ambient-light sensor according to the recorded time period. In another embodiment, the terminal may acquire a time period of a change process of a light intensity of the ambient-light sensor before the terminal detects that the ambient-light sensor satisfies the preset change condition, and upon detecting that the ambient-light sensor satisfies the preset change condition, the terminal may directly read out the time period of the change process previously acquired. In the present embodiment, how and when the terminal acquires the time period of the change process of the light intensity is not limited.

At step 206, an average of the time periods of the change processes is calculated.

The terminal may calculate an average of the acquired time periods of the change processes. Alternatively, the terminal may select at least one time period of change processes from the time periods of the change processes, and calculate an average of the at least one selected time periods of the change processes.

At step 207, an operation speed of the gesture is determined according to the average.

A time threshold is set in advance for the terminal. The operation speed of the gesture may be determined by comparing the average with the time threshold. In the embodiment, the time threshold may be one or more than one.

For example, two time thresholds are set in the terminal, respectively a first time threshold and a second time threshold. The second time threshold is smaller than the first time threshold. If the average is larger than the first time threshold, the terminal may determine that the gesture is a gesture at a slow speed. If the average is smaller than the second time threshold, the terminal may determine that the gesture is a gesture at a fast speed. If the average is larger than the second time threshold and smaller than the first time threshold, the terminal may determine that the gesture is a gesture at a moderate speed.

At step 208, the responding manner to the gesture is determined according to the operation speed.

The responding manners of the terminal to the gesture may be enriched based on recognition of the operation speed of the operation gesture.

For example, a responding manner to a speedy rightward sliding gesture may be fast forward of a video, a responding manner to a slowly rightward sliding gesture may be jumping to the next video.

Optionally, the embodiment also provides a method for recognizing an obstructing gesture made by the user. Fig. 2H is a flow chart illustrating a method for recognizing an obstructing gesture according to an exemplary embodiment. The method includes the following steps.

At step 209, from the at least one ambient-light sensor, a minimum value of the light intensity of each ambient-light sensor is acquired.

If the terminal determines that there is at least one ambient-light sensor which satisfies the preset change condition, the terminal may acquire a minimum value of the light intensity of each ambient-light sensor in the change process. The minimum value is the light intensity measured by an ambient-light sensor when the light coming into the ambient-light sensor is obstructed. Generally, the minimum value of the light intensity measured by each ambient-light sensor is the same.

At step 210, it is detected whether a light intensity measured by at least one ambient-light sensor remains at the minimum value during the same time period.

If the terminal detects that a light intensity measured by at least one ambient-light sensor is a minimum value at a time instant, the terminal may detect whether the light intensity measured by the at least one ambient-light sensor remains at the minimum value during the same time period.

At step 211, if the light intensity measured by the at least one ambient-light sensor remains at the minimum value during the same time period, the gesture is recognized as an obstructing gesture of the user.

The terminal may recognize that the operation gesture of the user is an obstructing gesture when the light intensity measured by the at least one ambient-light sensor remains at the minimum value during the same time period. The responding manners of the terminal to the operation gestures may be enriched by recognizing the obstructing gesture of the user. For example, when the terminal recognizes that the user makes an obstructing gesture, the corresponding responding manner may be a pause of playing for a video or a music. Alternatively, when the terminal recognizes that the user makes an obstructing gesture, the corresponding responding manner may be clicking on an application program.

Optionally, a first predetermined time may be set in the terminal. When the one or more light intensities measured by the at least one ambient-light sensor remains at the minimum value for a time period longer than or equal to the first predetermined time, it may recognize the operation of the user as a first type of obstructing gesture. Alternatively, a second predetermined time may be set in the terminal. When the one or more light intensities measured by the at least one ambient-light sensor remains at the minimum value for a time period shorter than or equal to the second predetermined time, it may recognize the operation of the user as a second type of obstructing gesture. Different responding manners may be set for the terminal to the different types of obstructing gestures.

Accordingly, in the method for recognizing a gesture provided by the present disclosure, when light coming into at least one ambient-light sensor is obstructed and no touch operation applied on the touch screen is detected, and if it is detected that the light coming into each of the ambient-light sensors is firstly switched from a non-obstructed state to an obstructed state and then switched from an obstructed state to a non-obstructed state, the operation gesture of the user may be recognized according to the position of the at least one ambient-light sensor. Thereby, the terminal can recognize the operation gesture made by the user without requiring the user to perform a touch operation on the touch screen. In this way, it can solve the problem that the terminal cannot recognize the operation gesture made by the user when it is not convenient for the user to perform a touch operation on the touch screen. Moreover, it can enrich the manners for recognizing a gesture and improve the flexibility of recognizing a gesture.

In addition, by recognizing a speed of an operation gesture and recognizing an obstructing gesture, the types of operation gestures can be expanded. It can solve the problem of insufficiency of manners for responding to operation gestures due to insufficient types of user gestures without contacting the touch screen. Thus, it can enrich the responding manners to the operation gestures on the touch screen.

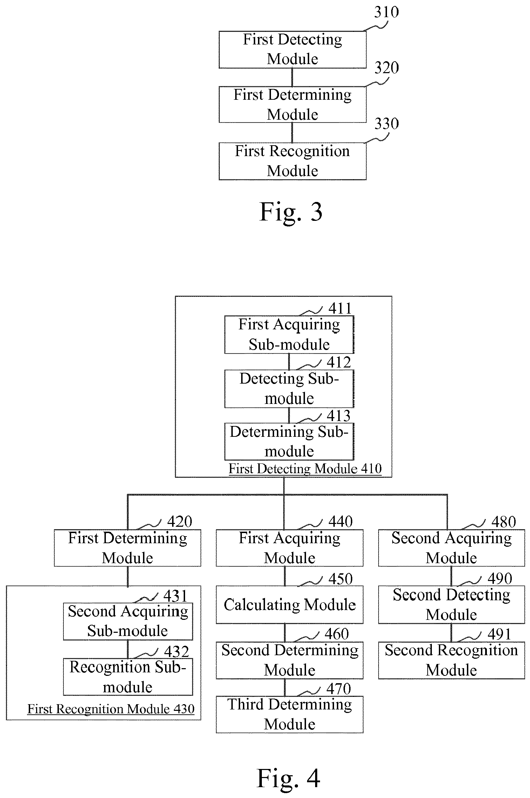

Fig. 3 is a block diagram illustrating an apparatus for recognizing a gesture according to an exemplary embodiment. The apparatus is applied in a terminal containing a touch screen. Ambient-light sensors are distributed on the touch screen. As shown in Fig. 3, the apparatus for recognizing a gesture includes: a first detecting module 310, a first determining module 320 and a first recognition module 330.

The first detecting module 310 is configured to, when light coming into at least one ambient-light sensor is obstructed and no touch operation applied on the touch screen is detected, detect whether the at least one ambient-light sensor satisfies a preset change condition, wherein the preset change condition is that the light coming into the ambient-light sensor is firstly switched from a non-obstructed state to an obstructed state and then switched from an obstructed state to a non-obstructed state;
the first determining module 320 is configured to, when the first detecting module 310 detects that at least one ambient-light sensor satisfies the preset change condition, determine a position of the at least one ambient-light sensor; and
the first recognition module 330 is configured to recognize an operation gesture of a user according to the position of the at least one ambient-light sensor which is determined by the first determining module 320.

Accordingly, in the apparatus for recognizing a gesture provided by the present disclosure, when light coming into at least one ambient-light sensor is obstructed and no touch operation applied on the touch screen is detected, and if it is detected that the light coming into each of the ambient-light sensors is firstly switched from a non-obstructed state to an obstructed state and then switched from an obstructed state to a non-obstructed state, the operation gesture of the user may be recognized according to the position of the at least one ambient-light sensor. Thereby, the terminal can recognize the operation gesture made by the user without requiring the user to perform a touch operation on the touch screen. In this way, it can solve the problem that the terminal cannot recognize the operation gesture made by the user when it is not convenient for the user to perform a touch operation on the touch screen. Moreover, it can enrich the manners for recognizing a gesture and improve the flexibility of recognizing a gesture.

Fig. 4 is a block diagram illustrating an apparatus for recognizing a gesture according to an exemplary embodiment. The apparatus is applied in a terminal containing a touch screen. Ambient-light sensors are distributed on the touch screen. As shown in Fig. 4, the apparatus for recognizing a gesture includes: a first detecting module 410, a first determining module 420 and a first recognition module 430.

The first detecting module 410 is configured to, when light coming into at least one ambient-light sensor is obstructed and no touch operation applied on the touch screen is detected, detect whether the at least one ambient-light sensor satisfies a preset change condition, wherein the preset change condition is that the light coming into the ambient-light sensor is firstly switched from a non-obstructed state to an obstructed state and then switched from an obstructed state to a non-obstructed state;
the first determining module 420 is configured to, when the first detecting module 410 detects that at least one ambient-light sensor satisfies the preset change condition, determine a position of the at least one ambient-light sensor; and
the first recognition module 430 is configured to recognize an operation gesture of a user according to the position of the at least one ambient-light sensor which is determined by the first determining module 420.

Optionally, the first detecting module 410 includes: a first acquiring sub-module 411, a detecting sub-module 412 and a determining sub-module 413.

The first acquiring sub-module 411 is configured to, for each ambient-light sensor, acquire a light intensity measured by the ambient-light sensor;
the detecting sub-module 412 is configured to detect whether the light intensity acquired by the first acquiring sub-module 411 firstly decreases and then increases; and
the determining sub-module 413 is configured to, if the detecting sub-module 412 detects that the light intensity firstly decreases and then increases, determine that the light coming into the ambient-light sensor is firstly switched from a non-obstructed state to an obstructed state and then switched from an obstructed state to a non-obstructed state, which satisfies the preset change condition.

Optionally, the first recognition module 430 includes: a second acquiring sub-module 431 and a recognition sub-module 432.

The second acquiring sub-module 431 is configured to acquire a time sequence of the at least one ambient-light sensor being successively obstructed; and
the recognition sub-module 432 is configured to recognize an operation gesture according to the position of the at least one ambient-light sensor and the time sequence acquired by the second acquiring sub-module 431.

Optionally, the apparatus further includes: a first acquiring module 440, a calculating module 450, a second determining module 460 and a third determining module 470.

The first acquiring module 440 is configured to acquire from the at least one ambient-light sensor a time period of the change process of the light intensity of each ambient-light sensor;
the calculating module 450 is configured to calculate an average of the time periods of the change processes acquired by the first acquiring module 440;
the second determining module 460 is configured to determine an operation speed of the gesture according to the average calculated by the calculating module 450; and
the third determining module 470 configured to determine a responding manner to the gesture according to the operation speed determined by the second determining module 460.

Optionally, the apparatus further includes: a second acquiring module 480, a second detecting module 490 and a second recognition module 491.

The second acquiring module 480 is configured to acquire from the at least one ambient-light sensor a minimum value of the light intensity of each ambient-light sensor;
the second detecting module 490 is configured to detect whether a light intensity measured by at least one ambient-light sensor remains at the minimum value acquired by the second acquiring module 480 during the same time period; and
the second recognition module 491 is configured to, if the second detecting module 490 detects that the light intensity measured by the at least one ambient-light sensor remains at the minimum value during the same time period, recognize the gesture as an obstructing gesture of the user.

Accordingly, in the apparatus for recognizing a gesture provided by the present disclosure, when light coming into at least one ambient-light sensor is obstructed and no touch operation applied on the touch screen is detected, and if it is detected that the light coming into the each of ambient-light sensors is firstly switched from a non-obstructed state to an obstructed state and then switched from an obstructed state to a non-obstructed state, the operation gesture of the user may be recognized according to the position of the at least one ambient-light sensor. Thereby, the terminal can recognize the operation gesture made by the user without requiring the user to perform a touch operation on the touch screen. In this way, it can solve the problem that the terminal cannot recognize the operation gesture made by the user when it is not convenient for the user to perform a touch operation on the touch screen. Moreover, it can enrich the manners for recognizing a gesture and improve the flexibility of recognizing a gesture.

In addition, by recognizing a speed of an operation gesture and recognizing an obstructing gesture, the types of operation gestures can be expanded. It can solve the problem of insufficiency of manners for responding to operation gestures due to insufficient types of user gestures without contacting the touch screen. Thus, it can enrich the responding manners to the operation gestures on the touch screen.

With respect to the apparatuses in the above embodiments, the specific manners for performing operations for individual modules therein have been described in detail in the embodiments regarding the relevant methods, which will not be elaborated herein.

An exemplary embodiment of the present disclosure provides an apparatus for recognizing a gesture, which can implement the method for recognizing a gesture provided by the present disclosure. The apparatus for recognizing a gesture is applied in a terminal containing a touch screen with ambient-light sensors distributed thereon. The apparatus includes: a processor; and a memory for storing instructions executable by the processor;
wherein the processor is configured to perform:
when light coming into at least one ambient-light sensor is obstructed and no touch operation applied on the touch screen is detected, detecting whether the at least one ambient-light sensor satisfies a preset change condition, the preset change condition being the light coming into the ambient-light sensor being firstly switched from a non-obstructed state to an obstructed state and then switched from an obstructed state to a non-obstructed state;
when at least one ambient-light sensor satisfies the preset change condition, determining a position of the at least one ambient-light sensor; and
recognizing an operation gesture of a user according to the position of the at least one ambient-light sensor.

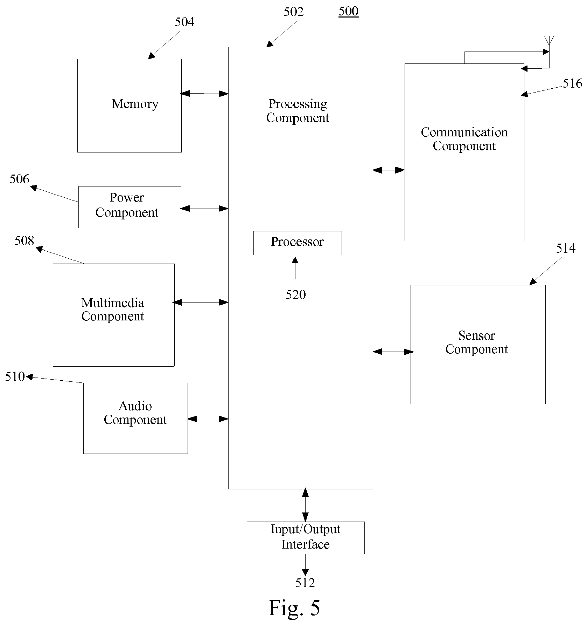

Fig. 5 is a block diagram illustrating an apparatus 500 for recognizing a gesture according to an exemplary embodiment. For example, the apparatus 500 may be a mobile phone, a computer, a digital broadcast terminal, a messaging device, a gaming console, a tablet, a medical device, exercise equipment, a personal digital assistant, and the like.

Referring to Fig. 5, the apparatus 500 may include one or more of the following components: a processing component 502, a memory 504, a power component 506, a multimedia component 508, an audio component 510, an input/output (I/O) interface 512, a sensor component 514, and a communication component 516.

The processing component 502 typically controls overall operations of the apparatus 500, such as the operations associated with display, telephone calls, data communications, camera operations, and recording operations. The processing component 502 can include one or more processors 518 to execute instructions to perform all or part of the steps in the above described methods. Moreover, the processing component 502 can include one or more modules which facilitate the interaction between the processing component 502 and other components. For instance, the processing component 502 can include a multimedia module to facilitate the interaction between the multimedia component 508 and the processing component 502.

The memory 504 is configured to store various types of data to support the operation of the apparatus 500. Examples of such data include instructions for any applications or methods operated on the apparatus 500, contact data, phonebook data, messages, pictures, video, etc. The memory 504 can be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the apparatus 500. The power component 506 can include a power management system, one or more power sources, and any other components associated with the generation, management, and distribution of power in the apparatus 500.

The multimedia component 508 includes a screen providing an output interface between the apparatus 500 and the user. In some embodiments, the screen can include a liquid crystal display (LCD) and a touch panel (TP). If the screen includes the touch panel, the screen can be implemented as a touch screen to receive input signals from the user. The touch panel includes one or more touch sensors to sense touches, swipes, and gestures on the touch panel. The touch sensors can not only sense a boundary of a touch or swipe action, but also sense a period of time and a pressure associated with the touch or swipe action. In some embodiments, the multimedia component 508 includes a front camera and/or a rear camera. The front camera and the rear camera can receive an external multimedia datum while the apparatus 500 is in an operation mode, such as a photographing mode or a video mode. Each of the front camera and the rear camera can be a fixed optical lens system or have focus and optical zoom capability.

The audio component 510 is configured to output and/or input audio signals. For example, the audio component 510 includes a microphone ("MIC") configured to receive an external audio signal when the apparatus 500 is in an operation mode, such as a call mode, a recording mode, and a voice recognition mode. The received audio signal can be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons can include, but are not limited to, a home button, a volume button, a starting button, and a locking button.

The sensor component 514 includes one or more sensors to provide status assessments of various aspects of the apparatus 500. For instance, the sensor component 514 can detect an open/closed status of the apparatus 500, relative positioning of components, e.g., the display and the keypad, of the apparatus 500, a change in position of the apparatus 500 or a component of the apparatus 500, a presence or absence of user contact with the apparatus 500, an orientation or an acceleration/deceleration of the apparatus 500, and a change in temperature of the apparatus 500. The sensor component 514 can include a proximity sensor configured to detect the presence of nearby objects without any physical contact. The sensor component 514 can also include a ambient-light sensor, configured to detect the light intensity of the ambient light of the apparatus 500. In some embodiments, the sensor component 514 can also include an accelerometer sensor, a gyroscope sensor, a magnetic sensor, a pressure sensor, or a temperature sensor.

The communication component 516 is configured to facilitate communication, wired or wirelessly, between the apparatus 500 and other devices. The apparatus 500 can access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module can be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 500 can be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 504, executable by the processor 518 in the apparatus 500, for performing the above-described methods. For example, the non-transitory computer-readable storage medium can be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope and spirit of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for recognizing a gesture, the method being performed by a terminal containing a touch screen with ambient-light sensors distributed thereon, **characterized in that** the method comprises:
when light coming into at least one ambient-light sensor is obstructed and no touch operation applied on the touch screen is detected, detecting (101) whether the at least one ambient-light sensor satisfies a preset change condition, the preset change condition including that the light coming into the ambient-light sensor is firstly changed from a non-obstructed state to an obstructed state and then switched from an obstructed state to a non-obstructed state;
when at least one ambient-light sensor satisfies the preset change condition, determining (102) a position of the at least one ambient-light sensor; and
recognizing (103) an operation gesture of a user according to the position of the at least one ambient-light sensor.

2. The method of claim 1, wherein detecting whether the at least one ambient-light sensor satisfies the preset change condition comprises:
for each ambient-light sensor, acquiring a light intensity measured by the ambient-light sensor;
detecting whether the light intensity firstlydecreases and then increases; and
if the light intensity firstly decreases and then increases, determining that the light coming into the ambient-light sensor is firstly switched from a non-obstructed state to an obstructed state and then switched from an obstructed state to a non-obstructed state , which satisfies the preset change condition.

3. The method of claim 1 or 2, wherein recognizing an operation gesture of a user according to the position of the at least one ambient-light sensor comprises:
acquiring a time sequence of the at least one ambient-light sensor being successively obstructed; and recognizing an operation gesture according to the position of the at least one ambient-light sensor and the time sequence.

4. The method of any of claims 1-3, wherein the method further comprises:
Acquiring (205) from the at least one ambient-light sensor a time period of the change process of the light intensity of each ambient-light sensor;
Calculating (206) an average of the time periods of the change processes;
Determining (207) an operation speed of the gesture according to the average; and
Determining (208) a responsive manner to the gesture according to the operation speed.

5. The method of any preceding claim, wherein the method further comprises:
Acquiring (209) from the at least one ambient-light sensor a minimum value of the light intensity of each ambient-light sensor;
Detecting (210) whether a light intensity measured by at least one ambient-light sensor remains at the minimum value during the same time period; and
if the light intensity measured by the at least one ambient-light sensor remains at the minimum value during the same time period, recognizing (211) the gesture as an obstructing gesture of the user.

6. An apparatus for recognizing a gesture, the method being performed by a terminal containing a touch screen with ambient-light sensors distributed thereon, **characterized in that** the apparatus comprises:
a first detecting module (310) configured to, when light coming into at least one ambient-light sensor is obstructed and no touch operation applied on the touch screen is detected, detect whether the at least one ambient-light sensor satisfies a preset change condition, the preset change condition being the light coming into the ambient-light sensor being firstly switched from a non-obstructed state to an obstructed state and then switched from an obstructed state to a non-obstructed state;
a first determining module (320) configured to, when the first detecting module detects that at least one ambient-light sensor satisfies the preset change condition, determine a position of the at least one ambient-light sensor; and
a first recognition module (330) configured to recognize an operation gesture of a user according to the position of the at least one ambient-light sensor which is determined by the first determining module.

7. The apparatus of claim 6, wherein the first detecting module comprises:
a first acquiring sub-module (411) configured to, for each ambient-light sensor, acquire a light intensity measured by the ambient-light sensor;
a detecting sub-module (412) configured to detect whether the light intensity acquired by the first acquiring sub-module firstly decreases and then increases; and
a determining sub-module (413) configured to, if the detecting sub-module detects that the light intensity firstly decreases and then increases, determine that the light coming into the ambient-light sensor is firstly switched from a non-obstructed state to an obstructed state and then switched from an obstructed state to a non-obstructed state, which satisfies the preset change condition.

8. The apparatus of claim 6 or 7, wherein the first recognition module comprises:
a second acquiring sub-module (431) configured to acquire a time sequence of the at least one ambient-light sensor being successively obstructed; and
a recognition sub-module (432) configured to recognize an operation gesture according to the position of the at least one ambient-light sensor and the time sequence acquired by the second acquiring sub-module.

9. The apparatus of any of claims 6-8, wherein the apparatus further comprises:
a first acquiring module (440) configured to acquire from the at least one ambient-light sensor a time period of the change process of the light intensity of each ambient-light sensor;
a calculating module (450) configured to calculate an average of the time periods of the change processes acquired by the first acquiring module;
a second determining module (460) configured to determine an operation speed of the gesture according to the average calculated by the calculating module; and
a third determining module (470) configured to determine a responding manner to the gesture according to the operation speed determined by the second determining module.

10. The apparatus of any of claims 6 to 9, wherein the apparatus further comprises:
a second acquiring module (480) configured to acquire from the at least one ambient-light sensor a minimum value of the light intensity of each ambient-light sensor;
a second detecting module (490) configured to detect whether a light intensity measured by at least one ambient-light sensor remains at the minimum value acquired by the second acquiring module (491) during the same time period; and
a second recognition module configured to, if the second detecting module detects that the light intensity measured by the at least one ambient-light sensor remains at the minimum value during the same time period, recognize the gesture as an obstructing gesture of the user.

11. An apparatus for recognizing a gesture, the method being performed by a terminal containing a touch screen with ambient-light sensors distributed thereon, **characterized in that** the apparatus comprises:
a processor; and
a memory for storing instructions executable by the processor;
wherein the processor is configured to perform the method of any of claims 1 to 5.
